# EUROPÄISCHE PATENTANMELDUNG

(11) **EP 0 766 199 A2**
(43) Veröffentlichungstag der Anmeldung: **02.04.1997**
(21) Anmeldenummer: 96113630.6
(22) Anmeldetag: 26.08.1996
(51) Int. Cl.: G06K 19/07

(54) **Plastikkarte mit einem Chip, Kontaktfeld mit galvanischen Kontakten sowie Spulen und/oder Kondensatoren zum Energie- und Datenaustausch mit einem Terminal**

(30) Priorität: 24.08.1995 DE 19531269
(71) Anmelder: Angewandte Digital Elektronik GmbH, 21521 Dassendorf (DE)
(72) Erfinder: Kreft, Hans-Diedrich, D-21521 Dassendorf (DE)
(74) Vertreter: Mierswa, Klaus, Dipl.-Ing.

(57) **Zusammenfassung**

Die Erfindung betrifft eine Plastikkarte, die einen Chip, ein Kontaktfeld mit innerhalb eines Terminals galvanisch zu kontaktierenden Kontakten sowie Spulen und/oder Kondensatoren zum Energie- und Datenaustausch mit dem Terminal enthält und ein Chip sowohl an die Kontakte, wie auch an die Spulen und/oder an die Kondensatoren angeschlossen ist; ein Chipteil und/oder Chip weist eine Mehrzahl von Ausgängen (A₁, ..., Aₙ) auf, die zu einem weiteren Chipteil des Chips und/oder wenigstens zu einem weiteren Chip führen, wobei die Plastikkarte je nach Vorliegen bestimmter physikalischer Zustände oder Eigenschaften oder Vorgaben durch den Benutzer über die Kontakte oder die Spulen und/oder die Kondensatoren mit dem Terminal in Energie- und Datenaustausch tritt und dadurch entweder kontaktbehaftet oder kontaktfrei arbeitet. An einem der Ausgänge (A₁, ..., Aₙ) wird eine elektrische Energieversorgung für wenigstens einen weiteren Chipteil des Chips oder den weiteren Chip zur Verfügung gestellt.

## Beschreibung

### Technisches Gebiet:

Die Erfindung betrifft eine Plastikkarte, die wenigstens einen elektronischen Chip, ein Kontaktfeld mit innerhalb eines externen Lese- und/oder Schreibgerätes (Terminal) galvanisch zu kontaktierenden Kontakten sowie Spulen und/oder Kondensatoren zum Energie- und Datenaustausch mit dem Lese- und/oder Schreibgerät enthält, gemäß dem Oberbegriff des Anspruchs 1.

### Stand der Technik:

Es sind Plastikkarten als Chipkarten bekannt, welche kontaktfrei oder kontaktbehaftet mit ihren Schreib/Lesegeräten Energie und Daten austauschen. Die Karten werden für vielfache Anwendungen wie zum Beispiel Telefon- oder Gesundheits- oder Zutrittskontrollkarten eingesetzt. Einen Überblick über solche Karten und deren Anwendungen ist in drei Ausgaben der deutschen Fachzeitschrift Elektronik Jahrgang 93 zusammengstellt.

Eine Plastik- oder Chipkartekarte gemäß dem Oberbegriff des Anspruchs 1 ist aus der DE-C-39 35 364 bekannt geworden, die als Bauteilegruppen weitere Bauelemente wie Kontakte und Spulen enthält und auf der ein mit einem Kontaktfeld verbundener Chip angeordnet ist und die zusätzlich Spulen zur Spannungsversorgung des Chips und zum Datenaustausch aufweist. Ein Dioden-Kondensatornetzwerk dient zum Gleichrichten und Glätten der in den Spulen induzierten Spannung, die ebenfalls zur Versorgung des Chips dient und dazu an eine Schaltung geführt ist, die mittels zweier logischer Pegel eine weitere Schaltung steuert, welche ihrerseits mit dem Kontaktfeld und an ihren Ausgängen an den Chip angeschlossen ist, wobei entweder die Signale von den Spulen oder vom Kontaktfeld an den Chip durchgeschaltet werden.

Durch die EP 0534 559 A1 ist eine Plastikkarte bekannt, die galvanische Kontakte gemäß IOS-Norm 7816 und Spulen gemäß der Entwurfs-IOS-Norm 10536 enthält. In dem einen Operationsmode können die Daten aus wenigstens einem Speicher des Chips oder eines Teils des Chips über die elektromagnetische Koppelstrecke mit geringem Energieverbrauch herausgelesen werden, indem nur ein Teil des integrierten Elektronikschaltkreises dazu aktiviert wird, so daß eine kontaktlose Energieversorgung über eine bestimmte Distanz möglich ist. Im anderen standardisierten Operationsmode können die Daten desselben Speichers mittels des im Elektronikschaltkreis enthaltenen Mikroprozessors, der ist, über die Kontakte gelesen und geschrieben werden.

### Technische Aufgabe:

Der Erfindung liegt die Aufgabe zugrunde, die technischen und physikalischen Möglichkeiten einer Plastikkarte der eingangs genannten Gattung (gemäß der DE 39 35 364) vollständig zu nutzen und einen geringstmöglichen Energieverbrauch während der Aktivierung des kontaktlosen Operationsmodes der Plastikkarte bei maximaler Entfernung der Karte von einem externen Lese- und/oder Schreibgerätes (Terminal) zu gewährleisten.

### Offenbarung der Erfindung und deren Vorteile:

Die Lösung der Aufgabe bei einer Plastikkarte, die wenigstens einem elektronischen Chip, ein innerhalb eines externen Lese- und/oder Schreibgerätes (Terminal) galvanisch zu kontaktierendes Kontaktfeld sowie Spulen und/oder Kondensatoren zum Energie- und Datenaustausch mit dem Lese- und/oder Schreibgerät enthält, wenigstens ein Chip sowohl an die Kontakte, wie auch an die Spulen und/oder an die Kondensatoren angeschlossen ist, wenigstens ein Chipteil und/oder Chip eine Mehrzahl von Ausgängen aufweist, die zu einem weiteren Chipteil des Chips und/oder wenigstens zu einem weiteren Chip führen, wobei die Plastikkarte je nach Vorliegen bestimmter physikalischer Zustände und/oder Eigenschaften und/oder Vorgaben durch den Benutzer über die Kontakte oder die Spulen und/oder die Kondensatoren mit dem Lese-und/oder Schreibgerät in Energie- und Datenaustausch tritt und dadurch entweder kontaktbehaftet oder kontaktfrei zu arbeitet, besteht darin, daß an mindestens einem der Ausgänge eine elektrische Energieversorgung für wenigstens einen weiteren Chipteil des Chips oder den weiteren Chip zur Verfügung gestellt wird.

Vorteilhaft kann mindestens ein Chipteil oder mindestens ein zweiter Chip einen ersten Speicher enthalten und ein zweiter Speicher räumlich getrennt von dem ersten Speicher vorhanden sein, wobei die beiden Speicher entweder sowohl über Aktionen, nämlich beim Vorliegen bestimmter physikalischer Zustände und/oder Eigenschaften und/oder Vorgaben durch den Benutzer, über die galvanischen Kontakte und/oder den Spulen und/oder Kondensatoren beschrieben und/oder gelesen werden können oder alternativ der erste Speicher selektiv nur über Aktionen, nämlich beim Vorliegen bestimmter physikalischer Zustände und/oder Eigenschaften und/oder Vorgaben durch den Benutzer, an den Kontakten oder den Spulen oder den Kondensatoren beschrieben werden kann, während der zweite Speicher wahlfrei durch Aktionen, wie Vorliegen bestimmter physikalischer Zustände und/oder Eigenschaften und/oder Vorgaben durch den Benutzer, an den Kontakten und/oder Kondensatoren gelesen werden kann und wobei die Auswahl des ersten oder zweiten Speichers selektiv über einen der Ausgänge (A₁, ..., Aₙ) erfolgt.

Vorteilhaft kann beim Vorliegen bestimmter physikalischer Zustände und/oder Eigenschaften und/oder Vorgaben durch den Benutzer an den Kontakten und/oder Spulen und/oder Kondensatoren eine bestimmte Auswahl bzw. Kombination von Ausgänge (A₁, ..., Aₙ) diesen Zuständen und/oder Eigenschaften und/oder Vorgaben zugeordnet werden und dadurch selektiv oder kombinativ Chipteile und/oder Chips und/oder Chipfunkionen durch Ausgänge (A₁, ..., Aₙ) aktiviert oder deaktiviert werden.

Beispielsweise kann dadurch der Ausgang A₁ - und/oder A₂ und/oder A₃ und/oder ... und/oder Aₙ - immer dann eine Spannung - oder umgekehrt keine Spannung - führen, wenn die galvanischen Kontakte der Plastikkarte im Terminal aktiviert sind. Dadurch kann der ganze Chip bzw. sämtliche Netzwerke und/oder elektronischen Teile mit Energie versorgt werden und eine hohe Energie eingespeist und auch gegebenenfalls in Kondensatoren bzw. Akkumulatoren gespeichert werden. Wenn dann die Plastikkarte im kontaktlosen Mode betrieben wird, wird dieser Zustand über einen oder mehrere der Ausgänge A₁, ... bis Aₙ den vorgeschalteten oder nachfolgenden elektronischen Netzwerken mitgeteilt, so daß für die momentan auszuführende Funktion der Plastikkarte nicht benötigte Netzwerke oder Chipteile oder Chips oder Speicher außer Funktion geschaltet werden oder inaktiv bleiben, so daß der Energieverbrauch minimiert wird.

Wenn zum Beispiel die Spannung am Ausgang A₁ - und/oder A₂ und/oder A₃ und/oder ... und/oder Aₙ - Null ist, so wird damit signalisiert, daß nunmehr eine Spannungsversorgung über Spulen und/oder Kondensatoren erfolgt bzw. zu erfolgen hat.

Eine Plastikkarte enthält somit ein Kontaktfeld mit galvanischen Kontakten zur Energieversorgung und zum Datenaustausch innerhalb eines Terminals und zusätzlich Spulen und/oder Kondensatoren und/oder optische Bauelemente ebenfalls zur Energieversorgung und zum Datenaustausch innerhalb oder außerhalb eines Terminals in gewisser Entfernung. Der/die in der Karte vorhandene(n) Chip(s) können sowohl an die Kontakte, wie auch an die Spulen und/oder an die Kondensatoren angeschlossen werden. Je nach Umfeld, d.h. in welcher Terminalumgebung die Karte sich befindet, wird über Kontakte oder Spulen und/oder Kondensatoren mit dem Terminal Energie und Daten ausgetauscht. Die Karte erfüllt derart ihre vorgesehene kontaktbehaftete oder kontaktfreie Arbeitsweise. Die Ausgänge A₁ bis Aₙ, wie sie in der DE 39 35 364 beschrieben sind, stellen somit an einem Ausgang eine elekrische Energieversorgung für einen weiteren Chipteil oder Chip oder mehrere Chips oder Netzwerke zur Verfügung. Damit sind die internen Ausgänge A₁, ..., Aₙ einer bestimmten Funkion oder Funktionen zugeführt: Sie können Aufgaben der Modeumschaltung erfüllen. Durch die Ausgänge A₁ bis Aₙ kann somit eine Modeumschaltung bewirkt werden, also eine gezielte Aktivierung von Chipteilen bzw. Chips oder Netzwerken, für entweder räumlich getrennte Teile oder räumlich und elektrisch trennbare Teile der Plastikkarte.

Mindestens ein Chipteil oder mindestens ein zweiter Chip kann einen ersten Speicher enthalten; ein zweiter Speicher ist räumlich getrennt von dem ersten Speicher vorhanden, wobei sich beide Speicher in ihren Eigenschaften voneinander unterscheiden können. So kann der eine Speicher bei großem Platzbedarf ein kleines Speichervolumen zur Verfügung stellen, verbraucht jedoch wenig Energie bei seinen Aktionen. Ein zweiter Speicher kann sehr viel Energie verbrauchen, jedoch auf kleinem Platz sehr große Speicherkapazität haben. Die beiden Speicher können selektiv entweder sowohl über Aktionen an den Kontakten und/oder den Spulen und/oder den Kondensatoren beschrieben und/oder gelesen werden. Derart kann beispielsweise der erste Speicher nur über Aktionen an den Kontakten oder den Spulen oder den Kondensatoren beschrieben werden, während der zweite Speicher wahlfrei durch Aktionen an den Kontakten und/oder Spulen und/oder Kondensatoren gelesen werden kann. Zur selektiven Auswahl der Aktionen und Verbindungen werden die Ausgänge A₁ bis Aₙ genutzt.

Die Eigenschaften, nämlich physikalische Gegebenheiten, Zustände und Bedingungen, an den Kontakten und/oder Spulen und/oder Kondensatoren bestimmen, welche Chipteile über welche Ausgänge A₁ bis Aₙ angesprochen werden. Somit können bestimmte physikalische Zustände oder Eigenschaften, wie unterschiedliche Frequenzen elektromagnetischer Wechselfelder, Codierungen, Spannungsamplituden von Spannungen, Phasenunterschiede, Wellenlänge, Lichtstrom, Feldstärken u.a., an den Kontakten und/oder Spulen und/oder Kondensatoren vorliegen. Je nach Art und/oder Eigenschaft der physikalischen Zustände oder Bedingungen wird eine bestimmte Auswahl von Ausgängen A1 bis An diesen Zuständen getroffen und zugeordnet. Derart werden selektiv Chipteile, zum Beispiel Speicher, Rechen- oder sonstige Netzwerke, oder Chips und/oder Chipfunktionen, wie beispielsweise Verschlüsselungsrechner oder Prüfalgorithmen, durch die Ausgänge A₁ bis Aₙ angesprochen und den physikalischen Zuständen bzw. Gegeben-heiten oder Eigenschaften, wie unterschiedliche Frequenzen elektromagnetischer Wechselfelder, Codierungen, Spannungsamplituden von Spannungen, Phasenunterschiede, Wellenlänge, Lichtstrom, Feldstärken u.a., zugeordnet.

Eine Plastikkarte kann somit in Abhängigkeit von ihrem physikalischen Umfeld, in dem sie sich gerade befindet, mit unterschiedlichen physikalischen Eigenschaften aktiviert werden. Dadurch kann auch ein und derselbe Chipteil, zum Beispiel ein Speicher, auf zwei verschiedene Arten, und somit Pfade, angesprochen oder gesperrt werden, so daß die Aktivierung ein und desselben Speichers in Abhängigkeit von den physikalischen Umgebungsbedingungen der Karte erfolgt. Bei kontaktfreien Karten oder für den kontaktfreien Mode kann die Umgebungsbedingung zum Beispiel die Entfernung der Karte zu ihrem Terminal oder ein ganz spezifischer Terminal sein. Einzelne Ausgänge A₁, ..., Aₙ oder eine Kombination von Ausgängen A₁, ..., Aₙ können somit darüber bestimmen, welche Chipteile oder weiteren Chips oder Netzwerke aktiviert werden.

In höchst vorteilhafter Weise kann die Bestimmung, welche Ausgänge A₁, ..., Aₙ oder welche Kombination von Ausgängen A₁, ..., Aₙ aktiviert oder deaktiviert werden sollen, von seiten des Eingangs der Plastikkarte vorgenommen werden, nämlich durch Selektion oder Kombination von Kontakten des Kontaktfeldes, insbesondere durch eine bestimmte, vorgebbare Ansteuerung von zu selektierenden oder zu kombinierenden Kontakten des Kontaktfeldes der Plastikkarte durch den Terminal. Die Bestimmung der Ansteuerung der Ausgänge A₁, ..., Aₙ über die Eingänge der Plastikkarte kann mit unterschiedlichen Terminals für unterschiedliche Zwecke durchgeführt werden.

Wenn beispielsweise beim Einführen der Plastikkarte in einen Terminal bei der Übermittlung von Energie und Daten im kontaktbehafteten Mode die Kontakte n₁ und n₂ des Kontaktfeldes einer Mehrheit von Kontakten >2 der Plastikkarte kurzgeschlossen werden, so kann damit eine ganz bestimmte Information der Plastikkarte mitgeteilt werden, was diese veranlaßt, daß dadurch auf der Ausgangsseite die internen Ausgänge A₁ oder A₂ geschaltet werden und zum Beispiel ein Spannungspegel an diesen Kontakt A₁ oder A₂ oder diese Kontakte A₁ und A₂ oder sonstwie gelegt oder abgeschaltet wird.

Diese Zustandsbestimmung bzw. Zustandsvorgabe, welche Ausgänge A₁, ..., Aₙ oder welche Kombination von Ausgängen A₁, ..., Aₙ zu aktivieren oder zu deaktivieren sind, insbesondere welche Eingangskombination von Kontakten des Kontaktfeldes durch den Terminal vorliegt bzw. vorgelegen hat und welche Schaltfolge oder Auswahl dadurch in den Ausgänge A₁, ..., Aₙ vorliegt oder vorgegeben ist, kann in einem Speicher der Plastikkarte gespeichert werden. Wenn einer Plastikkarte in einem Terminal über die Kontakte des Kontaktfeldes eine Zustandsbestimmung bzw. Zustandsvorgabe eingeprägt wurde, so wird diese Zustandsbestimmung bzw. Zustandsvorgabe gespeichert und die Plastikkarte arbeitet beispielsweise anschließend während des kontaktfreien Modes gleichermaßen.

### Gewerbliche Anwendbarkeit:

Die Erfindung ist insbesondere bei Chipkarten in Form von Plastikkarten gewerblich anwendbar, die kontaktfrei oder kontaktbehaftet mit ihren Lese- und/oder Schreibgeräten (Terminal) Energie und Daten austauschen. Die Ausgänge A₁, ..., Aₙ können somit Aufgaben der Modeumschaltung erfüllen bzw. einleiten und damit zusätzlich bestimmte Funkionen haben, wobei die Modeumschaltung durch die Eingänge der Plastikkarte, einschließlich über ein Terminal, vorgegeben und auch der Plastikkarte eingeprägt werden kann.

## Patentansprüche

1. Plastikkarte, die wenigstens einen elektronischen Chip, ein Kontaktfeld mit innerhalb eines externen Lese- und/oder Schreibgerätes (Terminal) galvanisch zu kontaktierenden Kontakten sowie Spulen und/oder Kondensatoren zum Energie- und Datenaustausch mit dem Lese- und/oder Schreibgerät enthält, wenigstens ein Chip sowohl an die Kontakte, wie auch an die Spulen und/oder an die Kondensatoren angeschlossen ist, wenigstens ein Chipteil des Chips und/oder Chip eine Mehrzahl von Ausgängen (A₁, ..., Aₙ) aufweist, die zu einem weiteren Chipteil des Chips und/oder wenigstens zu einem weiteren Chip führen, wobei die Plastikkarte je nach Vorliegen bestimmter physikalischer Zustände und/oder Eigenschaften und/oder Vorgaben durch den Benutzer über die Kontakte oder die Spulen und/oder die Kondensatoren mit dem Lese-und/oder Schreibgerät in Energie- und Datenaustausch tritt und dadurch entweder kontaktbehaftet oder kontaktfrei zu arbeiten imstande ist, dadurch gekennzeichnet,
daß an mindestens einem der Ausgänge (A₁, ..., Aₙ) eine elektrische Energieversorgung für wenigstens einen weiteren Chipteil des Chips oder den weiteren Chip zur Verfügung gestellt wird.

2. Plastikkarte nach Anspruch 1, dadurch gekennzeichnet,
daß mindestens ein Chipteil des Chips oder mindestens ein zweiter Chip einen ersten Speicher enthält und ein zweiter Speicher räumlich getrennt von dem ersten Speicher vorhanden ist,
- wobei die beiden Speicher entweder sowohl über Aktionen, nämlich beim Vorliegen bestimmter physikalischer Zustände und/oder Eigenschaften und/oder Vorgaben durch den Benutzer, an den galvanischen Kontakten und/oder den Spulen und/oder Kondensatoren beschrieben und/oder gelesen werden können
- oder alternativ der erste Speicher selektiv nur über Aktionen, nämlich beim Vorliegen bestimmter physikalischer Zustände und/oder Eigenschaften und/oder Vorgaben durch den Benutzer, an den Kontakten oder den Spulen oder den Kondensatoren beschrieben werden kann, während der zweite Speicher wahlfrei durch Aktionen, wie Vorliegen bestimmter physikalischer Zustände und/oder Eigenschaften und/oder Vorgaben durch den Benutzer, an den Kontakten und/oder Kondensatoren gelesen werden kann,
- wobei die Auswahl des ersten oder zweiten Speichers selektiv über einen der Ausgänge (A₁, ..., Aₙ) erfolgt.

3. Plastikkarte nach Anspruch 1 oder 2, dadurch gekennzeichnet,
daß beim Vorliegen bestimmter physikalischer Zustände und/oder Eigenschaften und/oder Vorgaben durch den Benutzer an den Kontakten und/oder Spulen und/oder Kondensatoren eine bestimmte Auswahl bzw. Kombination von Ausgänge (A₁, ..., Aₙ) diesen Zuständen und/oder Eigenschaften und/oder Vorgaben zugeordnet werden und dadurch selektiv oder kombinativ Chipteile des Chips und/oder Chips und/oder Chipfunktionen durch Ausgänge (A₁, ..., Aₙ) aktiviert oder deaktiviert werden.

4. Plastikkarte nach Anspruch 1, dadurch gekennzeichnet,
daß die Bestimmung, welche Ausgänge (A₁, ..., Aₙ) oder welche Kombination von Ausgängen (A₁, ..., Aₙ) aktiviert oder deaktiviert werden, von seiten des Eingangs der Plastikkarte vorgenommen wird, nämlich durch Selektion oder Kombination von Kontakten des Kontaktfeldes, insbesondere durch eine bestimmte, vorgebbare Ansteuerung der zu selektierenden oder zu kombinierenden Kontakte des Kontaktfeldes der Plastikkarte durch den Terminal.

5. Plastikkarte nach Anspruch 1 oder 4, dadurch gekennzeichnet,
daß die Zustandsbestimmung, welche Ausgänge (A₁, ..., Aₙ) oder welche Kombination von Ausgängen (A₁, ..., Aₙ) zu aktivieren oder zu deaktivieren sind, insbesondere welche Eingangskombination von Kontakten des Kontaktfeldes durch den Terminal vorliegt, in einem Speicher der Plastikkarte gespeichert wird.
